# EUROPÄISCHE PATENTSCHRIFT

(11) **EP 1 181 177 B1**
(45) Veröffentlichungstag und Bekanntmachung des Hinweises auf die Patenterteilung: **14.09.2005**
(21) Anmeldenummer: 01921176.2
(22) Anmeldetag: 10.03.2001
(51) Int. Cl.: B60S 1/34

(54) **SCHEIBENWISCHERANTRIEB**
WINDSCREEN-WIPER DRIVE
ENTRAINEMENT D'ESSUIE-GLACE

(30) Priorität: 17.03.2000 DE 10013190
(43) Veröffentlichungstag der Anmeldung: 27.02.2002
(73) Patentinhaber: ROBERT BOSCH GMBH, 70442 Stuttgart (DE)
(72) Erfinder: ZIMMER, Joachim, 77880 Sasbach (DE)
(86) Internationale Anmeldenummer: PCT/DE2001/000918
(87) Internationale Veröffentlichungsnummer: WO 2001/068424

(56) Entgegenhaltungen:
- EP-A- 0 182 123
- DE-A- 19 624 297
- DE-C- 19 634 718
- FR-A- 2 725 414

## Beschreibung

### Stand der Technik

Die Erfindung betrifft einen Scheibenwischerantrieb mit einem Antriebsmechanismus, einem Antriebshebel, dessen erstes Ende mit dem Antriebsmechanismus verbunden ist, so daß er um eine Antriebsachse verschwenkt werden kann, einem Koppelhebel, dessen erstes Ende mit dem zweiten Ende des Antriebshebels durch ein Koppelgelenk mit definierter Drehachse und dessen zweites Ende mit einem Scheibenwischerblatt verbunden ist, und einem Abtriebshebel, der mit dem Koppelhebel verbunden ist. Ein derartiger Scheibenwischerantrieb ist z.B. aus der DE-A- 196 34 718 bzw. aus der FR-A-2 725 414 bekannt.

Der Antriebshebel, der Koppelhebel und der Abtriebshebel bilden einen Viergelenk-Mechanismus, der die Funktion hat, eine Hubbewegung zu erzeugen, so daß sich ein größeres Wischfeld ergibt. Eine weitere Funktion eines solchen Viergelenk-Mechanismus kann darin bestehen, den Anstellwinkel des Scheibenwischerblattes relativ zur zu reinigenden Scheibe zielgerichtet zu beeinflussen.

Unter der Annahme, daß sämtliche Drehachsen des Viergelenk-Mechanismus parallel zueinander sind und außerdem das Scheibenwischerblatt an einer ebenen Scheibe anliegt, die senkrecht zu den Drehachsen ist, ergibt sich immer eine Ausrichtung der Längs-Symmetrieebene des Scheibenwischerblattes, die senkrecht zur Ebene der Scheibe ist. Dies kann dazu führen, daß es in den Umkehrlagen des Scheibenwischerblattes, also beim Übergang von einer Bewegungsrichtung in die andere in den beiden Extrempositionen, zu einem Rattern des Scheibenwischerblattes auf der Scheibe kommt, da die Wischlippe des nicht angestellten Scheibenwischerblattes aus ihrer einen abgebogenen Stellung in die andere umklappen muß. Dieses Problem kann sich verschärfen, wenn es aufgrund von Toleranzen etc. zu Fehlstellungen des Scheibenwischerblattes kommt. Grundsätzlich klappt die Wischlippe des Scheibenwischerblattes um so leichter und geräuscharmer um, je stärker das Scheibenwischerblatt beim Erreichen der Endlage entsprechend der neuen Bewegungsrichtung angestellt ist. Um einen solchen vorteilhaften Anstellwinkel, der auch Normalenfehler genannt wird, zu erreichen, ist bekannt, die Drehachsen des Viergelenk-Mechanismus schräg zur zu reinigenden Scheibe auszurichten. Auf diese Weise läßt sich in den jeweiligen Umkehrlagen des Scheibenwischerblattes ein kleiner Anstellwinkel erreichen. Eine größere Schrägstellung der Antriebsachse ist aber nicht möglich, da es sonst zu einer Kollision zwischen dem Antriebshebel oder dem Koppelhebel einerseits und der Scheibe des Fahrzeugs oder der Motorhaube andererseits kommen würde.

Die Aufgabe der Erfindung besteht somit darin, einen Scheibenwischerantrieb der eingangs genannten Art dahingehend weiterzubilden, daß gezielt größere Anstellwinkel des Scheibenwischerblattes relativ zur Scheibe im Bereich der beiden Umkehrlagen möglich sind.

### Vorteile der Erfindung

Der Scheibenwischerantrieb mit den Merkmalen des Patentanspruchs 1 hat den Vorteil, daß mit wenig Bauraum und auf rein mechanischem Wege eine gezielte Beeinflussung des Anstellwinkels des Scheibenwischerblattes in den jeweiligen Umkehrlagen möglich ist. Die auf den Koppelarm und somit das Scheibenwischerblatt übertragene Schrägstellung ergibt sich allein aufgrund der Schrägstellung der Drehachse des Koppelgelenks relativ zur Antriebsachse des Antriebshebels. Der Antriebshebel führt weiterhin eine Schwenkbewegung in einer einzigen Ebene aus, so daß eine Kollision mit der Scheibe des Fahrzeugs oder der Motorhaube verhindert ist. Durch die Ausrichtung der Drehachse des Koppelgelenks im Raum relativ zu einer fiktiven Neutralstellung, die parallel zur Antriebsachse ist, kann die Größe des Anstellwinkels des Scheibenwischerblattes sowie die Position des Scheibenwischerantriebs eingestellt werden, in welcher der Antriebswinkel maximal ist.

Vorteilhafte Ausgestaltungen der Erfindung ergeben sich aus den Unteransprüchen.

### Zeichnungen

Die Erfindung wird nachfolgend anhand einer bevorzugten Ausführungsform beschrieben, die in den beigefügten Zeichnungen dargestellt ist. In diesen zeigen:
- Figur 1 eine perspektivische Ansicht eines in ein Fahrzeug eingebauten Scheibenwischerantriebs;
- Figur 2 in einem Querschnitt ein auf einer Scheibe aufliegendes Scheibenwischerblatt;
- Figur 3 in einer perspektivischen Ansicht einen erfindungsgemäßen Scheibenwischerantrieb in einer ersten Stellung;
- Figur 4 in einer vergrößerten Ansicht den beim Scheibenwischerantrieb von Figur 3 verwendeten Antriebshebel;
- Figur 5 in einer perspektivischen Ansicht den Scheibenwischerantrieb von Figur 3 in einer zweiten Stellung;
- Figur 6 in einer vergrößerten Ansicht den beim Scheibenwischerantrieb von Figur 5 verwendeten Antriebshebel;

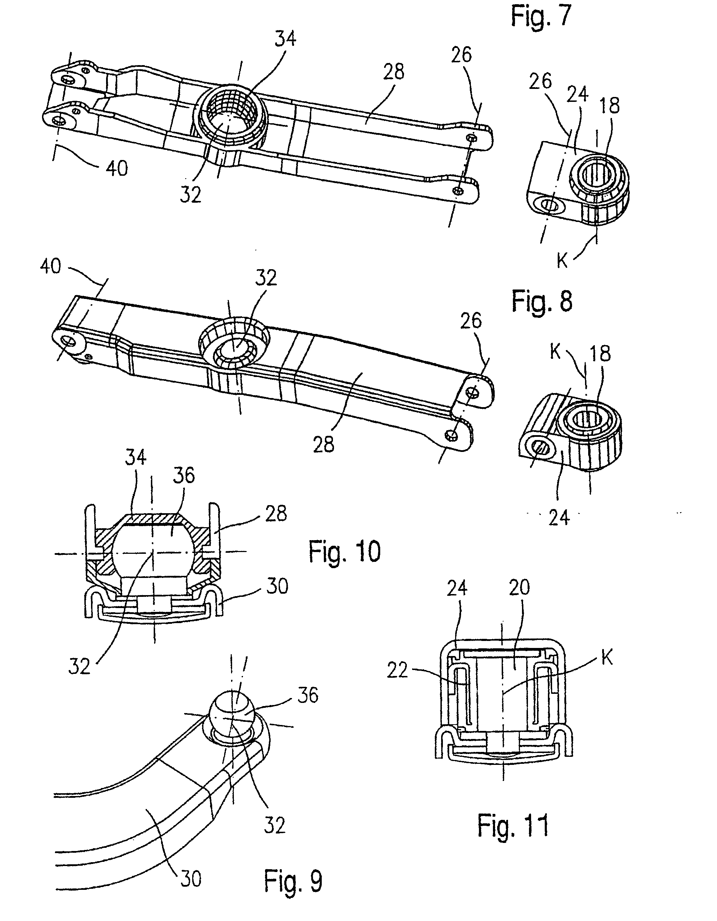

- Figur 7 in einer perspektivischen Unteransicht den Koppelhebel, der beim Scheibenwischerantrieb von Figur 3 verwendet wird;
- Figur 8 in einer perspektivischen Draufsicht den Koppelhebel von Figur 7;
- Figur 9 in einer perspektivischen abgebrochenen Ansicht den Abtriebshebel des in Figur 3 gezeigten Scheibenwischerantriebs;
- Figur 10 in einer Querschnittsansicht das Gelenk zwischen dem Koppelhebel und dem Abtriebshebel;
- Figur 11 in einer Querschnittsansicht das Gelenk zwischen dem Antriebshebel und dem Koppelhebel;
- Figur 12 ein Diagramm des Verlaufs des Anstellwinkels eines Scheibenwischerblattes relativ zur Scheibe bei ebener Scheibe; und
- Figur 13 ein Diagramm des Verlaufs des Anstellwinkels bei räumlich gekrümmter Scheibe.

### Beschreibung des Ausführungsbeispiels

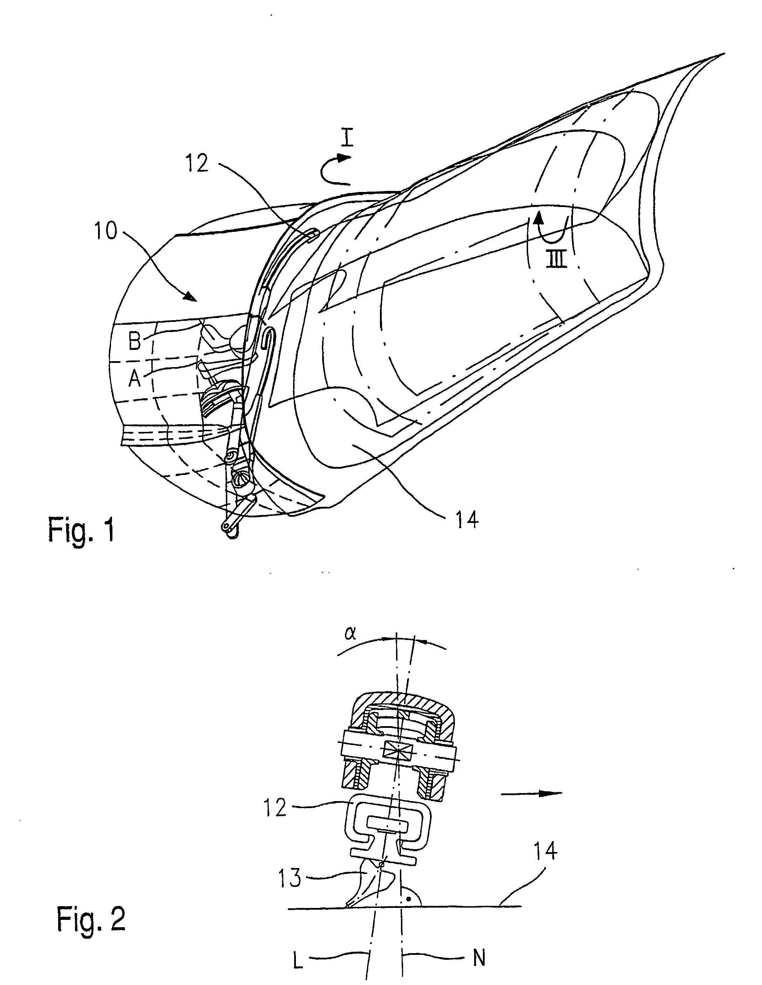

In Figur 1 ist ein Scheibenwischerantrieb 10 zu sehen, der dazu dient, ein Scheibenwischerblatt 12 auf einer Scheibe 14 zu verstellen. Dabei soll das Scheibenwischerblatt 12 in Abhängigkeit von seiner Position auf der Scheibe unterschiedliche Anstellwinkel relativ zu der Scheibe an der entsprechenden Stelle haben. Dies ist in Figur 2 zu sehen, in der ein Winkel α zu sehen ist, der zwischen einer Längs-Symmetrieebene L und einer Senkrechten N auf die Oberfläche der Scheibe 14 vorliegt. Je größer der Anstellwinkel α, auch Normalenfehler genannt, ist, desto leichter klappt eine am Scheibenwischerblatt kippbar ausgebildete Wischlippe 13 aus ihrer einen Stellung in die andere. Dieses Umkippen erfolgt an den sogenannten Umkehrlagen des Scheibenwischerblattes, also den jeweiligen Extremlagen am einen und am anderen Rand der zu reinigenden Scheibe. Der Anstellwinkel ist dabei so einzustellen, daß das Scheibenwischerblatt in der neuen Bewegungsrichtung nach vorne gekippt ist. In Figur 2 ist somit die Anstellung des Scheibenwischerblattes kurz nach Erreichen der Umkehrlage und nach dem Umklappen der Wischlippe 13 in die neue Stellung für eine Bewegung in Pfeilrichtung gezeigt.

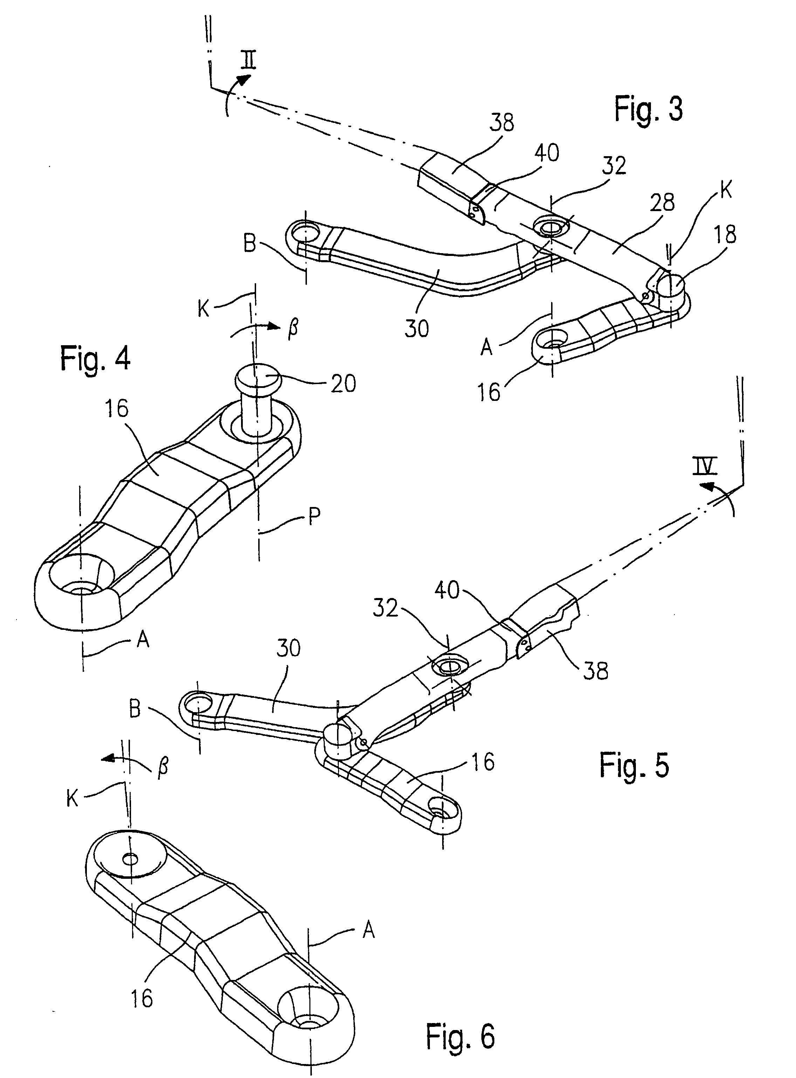

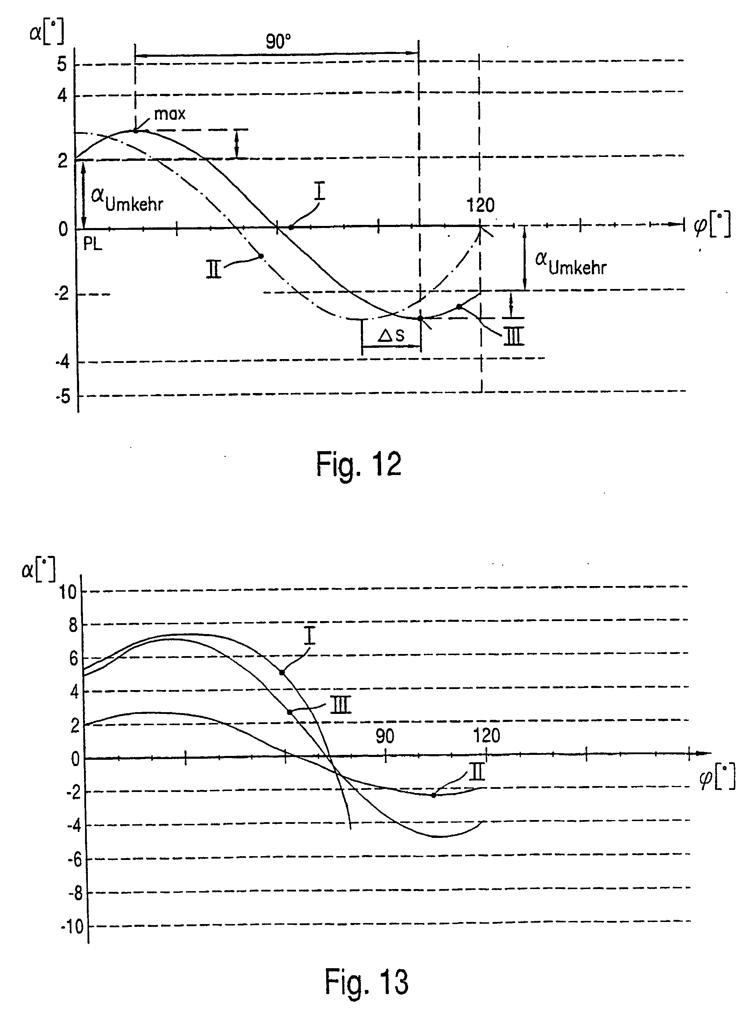

Der Anstellwinkel wird mittels des im Detail in den Figuren 3 bis 6 dargestellten Scheibenwischerantriebes erzielt. Dieser Scheibenwischerantrieb weist einen Antriebshebel 16 auf, der hier allgemein länglich ausgebildet ist. Er weist ein erstes Ende auf, das mit einem (nicht dargestellten) Scheibenwischermotor verbunden werden kann, so daß er um eine Antriebsachse A eine oszillierende Bewegung ausführen kann. Am zweiten Ende des Antriebshebels 16 ist ein Koppelgelenk 18 vorgesehen, das eine definierte Drehachse K aufweist. Das Koppelgelenk ist hier durch die Verbindung eines Lagerzapfens 20 mit einer Lagerbuchse 22 (siehe auch Figur 11) gebildet.

Die Drehachse K des Koppelgelenks ist gegenüber einer fiktiven Achse P, die zur Antriebsachse A des Antriebshebels parallel ist, um einen Winkel β geneigt. Die Drehachse K ist dabei im Raum relativ zur Antriebsachse A so ausgerichtet, daß der bezüglich den Figuren 4 und 6 oberhalb des Antriebshebels 16 liegende Abschnitt der Drehachse K einen größeren Abstand von der Antriebsachse A hat als der unterhalb des Antriebshebels liegende Abschnitt. Anders ausgedrückt hat die Drehachse K des Koppelgelenks, betrachtet in einer Ebene, die definiert ist durch die Antriebsachse A und den Mittelpunkt des Koppelgelenks, auf der Seite des Antriebshebels 16, zu der das Scheibenwischerblatt 12 gerichtet ist, einen kleineren Abstand von der Antriebsachse A als auf der entgegengesetzten Seite. Als Anhaltspunkt für die Größe des Winkels β können Werte von 3° bis 10° verwendet werden.

Das Koppelgelenk 18 ist an einem Koppelgelenkstück 24 ausgebildet, das über ein Schwenkgelenk 26, das hier durch seine Mittelachse symbolisiert ist, mit einem Koppelhebel 28 verbunden ist. Der Einfachheit halber wird nachfolgend das Koppelgelenkstück 24 als Teil des Koppelhebels 28 angesehen. Um zu vermeiden, daß auf das Koppelgelenk 18 größere Kippmomente aufgebracht werden, sollte der Abstand zwischen der Drehachse K des Koppelgelenks und dem Schwenkgelenk 26 des Koppelhebels so gering wie möglich sein.

Der Koppelhebel 28 ist mit einem Abtriebshebel 30 durch ein Kugelgelenk 32 verbunden. Das Kugelgelenk 32 besteht aus einer Kugelschale 34, die im Koppelhebel 28 ausgebildet ist, und einer Gelenkkugel 36, die an einem Ende des Abtriebshebels 30 angebracht ist.

An den Koppelhebel 28 schließt sich ein in Figur 3 lediglich angedeuteter Scheibenwischerarm 38 an, der zum Scheibenwischerblatt 12 führt. Zwischen dem Koppelhebel 28 und dem Scheibenwischerarm 38 ist ein herkömmliches Schwenkgelenk 40 vorgesehen, welches es ermöglicht, die Schwenkbewegung des Koppelhebels 28 auf das Scheibenwischerblatt 12 zu übertragen, während gleichzeitig das Scheibenwischerblatt mittels des Scheibenwischerarms 38 und einer Feder gegen die Scheibe 14 gedrückt werden kann.

Der Abtriebshebel 30 ist an seinem vom Kugelgelenk 32 abgewandten Ende mit einer Blindlagerwelle verbunden, die durch ihre Drehachse B symbolisiert ist. Die Drehachse B der Blindlagerwelle ist parallel zur Antriebsachse A.

Bei der gezeigten Ausführungsform sind der Antriebshebel, der Koppelhebel, das Koppelgelenkstück und der Abtriebshebel als Blechbiegeteile ausgeführt. Es ist aber ohne weiteres möglich, einzelne oder mehrere der Bauteile als Druckgußteile auszuführen oder andere geeignete Konstruktionen zu verwenden.

Der beschriebene Scheibenwischerantrieb arbeitet in der folgenden Weise: Das Scheibenwischerblatt wird in an sich bekannter Weise über die Scheibe bewegt, indem dem Antriebshebel 16 eine oszillierende Schwenkbewegung um die Antriebsachse A erteilt wird. Wenn das Scheibenwischerblatt im Verlauf dieser Bewegung sich in der in Figur 1 gezeigten Umkehrlage befindet, also die in Figur 1 mit dem Pfeil I angedeutete Bewegungsrichtungsumkehr ausführt, ist das Scheibenwischerblatt gegenüber einer zur Scheibe senkrechten Anordnung in der Richtung des Pfeils II von Figur 3 angestellt. Dies resultiert aus dem Winkel β, um den die Drehachse K des Koppelgelenks 18 nach außen verschwenkt ist. Die aus dieser Schiefstellung resultierende Verdrehung des Koppelgelenkstücks 24 wird über das Schwenkgelenk 26 und das Schwenkgelenk 40 zum Scheibenwischerblatt übertragen; das Kugelgelenk 32 zwischen dem Koppelhebel 28 und dem Abtriebshebel 30 behindert diese Kippbewegung nicht.

Wenn das Scheibenwischerblatt sich in der entgegengesetzten Umkehrlage befindet, also die in Figur 1 mit dem Pfeil III angedeutete Bewegungsrichtungsumkehr ausführt, befindet sich der Scheibenwischerantrieb in der in Figur 5 gezeigten Stellung. Auch in dieser Stellung wirkt sich der Winkel β, um den die Drehachse K des Koppelgelenks nach außen gekippt ist, aus, so daß das Scheibenwischerblatt in der Richtung des Pfeils IV von Figur 5 im Vergleich zu einer senkrechten Ausrichtung angestellt ist.

In Figur 12 ist der Verlauf des Anstellwinkels α des Scheibenwischerblattes bei einer Drehung des Antriebshebels 16 um einen Antriebswinkel ϕ um die Antriebsachse A für den Fall einer ebenen Scheibe dargestellt. Mit I ist der Verlauf des Anstellwinkels für einen Scheibenwischerantrieb dargestellt, bei dem die Antriebsachse des Antriebshebels senkrecht zur Ebene der Scheibe ist. Daraus folgt, daß sich der Anstellwinkel des Scheibenwischerblattes im Verlauf der Schwenkbewegung des Antriebshebels nicht ändert. Mit II ist der Verlauf des Anstellwinkels für einen erfindungsgemäßen Scheibenwischerantrieb gezeigt, bei dem der Anstellwinkel in der Parklage des Scheibenwischerblattes, also der in Figur 1 gezeigten Stellung, maximal ist. Aufgrund von geometrischen Verhältnissen, auf die später im Detail eingegangen wird, ist dann der Anstellwinkel in der entgegengesetzten Umkehrlage, die einem Verschwenken des Antriebshebels um etwa 120° entspricht, etwa Null. Mit III ist der Verlauf einer Kurve für einen erfindungsgemäßen Scheibenwischerantrieb gezeigt, die gegenüber der Kurve II um eine Strecke Δs verschoben ist. Diese Strecke ist so gewählt, daß sich in den beiden Umkehrlagen des Scheibenwischerblattes betragsmäßig derselbe Anstellwinkel α_{Umkehr} ergibt. Würde die Kurve nicht verschoben, ergäbe sich zwar in einer der beiden Umkehrlagen ein größerer Anstellwinkel; in der anderen Umkehrlage ergäbe sich aber ein Anstellwinkel von etwa 0°, da die beiden Maxima des Anstellwinkels aus geometrischen Gründen immer um einen Antriebswinkel von 90° auseinanderliegen.

In Figur 13 sind dieselben Kurven eingezeichnet, wenn sich der Scheibenwischer über eine räumlich gekrümmte Scheibe bewegt, wie sie in der Praxis vorkommt. Wie zu sehen ist, ergibt sich mit dem erfindungsgemäßen Scheibenwischerantrieb ein optimierter Verlauf des Anstellwinkels, bei dem die sich maximal ergebenden Anstellwinkel sowohl betragsmäßig ausreichend hoch sind als auch relativ zum Antriebswinkel ϕ sinnvoll ausgerichtet sind.

Wie durch Vergleich der Figuren 3 und 5 zu sehen ist, führt der Antriebshebel 16, um das Scheibenwischerblatt von der einen in die andere Umkehrlage zu bringen, eine Schwenkbewegung um einen Winkel von etwas über 90° aus. Je nach Konstruktion ergeben sich Antriebswinkel in der Größenordnung von 100 bis 130°. In jeder der beiden Extremstellungen erstreckt sich der Koppelhebel 28 etwa senkrecht zum Antriebshebel 16. Wenn angenommen wird, daß sich in jeder der beiden Umkehrlagen ein Winkel von genau 90° zwischen dem Koppelhebel und dem Antriebshebel einstellt, ergäben sich die größten Anstellwinkel in den Umkehrlagen, wenn die zwischen der Drehachse K des Koppelgelenks und der zur Antriebsachse A parallelen, fiktiven Achse P eingeschlossene Fläche sich in der Ebene erstreckt, die von der Antriebsachse und der fiktiven Achse P definiert wird. Anders ausgedrückt wird die Drehachse K in der Verlängerung der Längsrichtung des Antriebshebels nach außen geschwenkt und nicht etwa schräg zu dieser Längsachse. Wenn dagegen berücksichtigt wird, daß in der Praxis der Winkel zwischen dem Koppelhebel und dem Antriebshebel in den beiden Umkehrlagen, also zu dem Zeitpunkt, zu dem die Größe des Anstellwinkels von besonderem Interesse ist, nicht gleich 90° ist, kann die Richtung, in der die Drehachse K gegenüber der fiktiven Achse P geschwenkt wird, auch von der Verlängerung der Längsrichtung des Antriebshebels abweichen. Beachtet werden muß, daß eine Änderung der Ausrichtung der Drehachse K des Koppelgelenks im Raum sich auf den Anstellwinkel des Scheibenwischerblattes in beiden Umkehrlagen auswirkt, so daß ein Kompromiß aufgefunden werden muß.

Anstelle der beschriebenen Ausgestaltung der verschiedenen Gelenke sind auch andere Gelenktypen denkbar. Wichtig ist lediglich, daß das Koppelgelenk 18 sowohl die Schwenkbewegung des Koppelhebels 28 um dessen Längsachse hervorrufen können muß als auch einen Winkelausgleich zwischen dem Antriebshebel 16 und dem Koppelhebel 28 erlauben muß. Anstelle der beschriebenen Verbindung zwischen Antriebshebel und Koppelhebel in der Form von zwei in Reihe geschalteten Schwenkge lenken könnte auch ein Kardangelenk verwendet werden. Anstelle des beschriebenen Kugelgelenks zwischen Koppelhebel und Abtriebshebel könnte dort ein Kardangelenk verwendet werden. Es wäre auch möglich, das Kardangelenk durch eine Abfolge von zwei zueinander senkrechten Schwenkgelenken zu ersetzen.

### Bezugszeichenliste

- 10:: Scheibenwischerantrieb
- 12:: Scheibenwischerblatt
- 13:: Wischlippe
- 14:: Scheibe
- 16:: Antriebshebel
- 18:: Koppelgelenk
- 20:: Lagerzapfen
- 22:: Lagerbuchse
- 24:: Koppelgelenkstück
- 26:: Schwenkgelenk Koppelhebel
- 28:: Koppelhebel
- 30:: Abtriebshebel
- 32:: Kugelgelenk
- 34:: Kugelpfanne
- 36:: Gelenkkugel
- 38:: Scheibenwischerarm
- 40:: Schwenkgelenk Scheibenwischerarm
- A:: Antriebsachse
- B:: Drehachse Blindlagerwelle
- K:: Drehachse Koppelgelenk
- L:: Längs-Symmetrieebene
- N:: Senkrechte
- P:: Fiktive Parallelachse
- α:: Anstellwinkel
- β:: Neigungswinkel Koppelachse
- ϕ:: Antriebswinkel
- Δs:: Verschiebestrecke

## Patentansprüche

1. Scheibenwischerantrieb mit einem Antriebsmechanismus, einem Antriebshebel (16), dessen erstes Ende mit dem Antriebsmechanismus verbunden ist, so daß er um eine Antriebsachse (A) verschwenkt werden kann, einem Koppelhebel (28), dessen erstes Ende mit dem zweiten Ende des Antriebshebels durch ein Koppelgelenk (18) mit definierter Drehachse (K) und dessen zweites Ende mit einem Scheibenwischerblatt (12) verbunden ist, und einem Abtriebshebel (30), der mit dem Koppelhebel verbunden ist, **dadurch gekennzeichnet, daß** die Drehachse (K) des Koppelgelenks und die Antriebsachse (A) des Antriebshebels nicht parallel zueinander sind.

2. Scheibenwischerantrieb nach Anspruch 1, **dadurch gekennzeichnet, daß** die Drehachse (K) des Koppelgelenks, betrachtet in einer Ebene, die definiert ist durch die Antriebsachse (A) und den Mittelpunkt des Koppelgelenks, auf der Seite des Antriebshebels (16), zu der das Scheibenwischerblatt (12) gerichtet ist, einen kleineren Abstand von der Antriebsachse (A) hat als auf der entgegengesetzten Seite.

3. Scheibenwischerantrieb nach Anspruch 2, **dadurch gekennzeichnet, daß** die Drehachse (K) des Koppelgelenks in der besagten Ebene liegt.

4. Scheibenwischerantrieb nach einem der Ansprüche 2 und 3, **dadurch gekennzeichnet, daß** die Drehachse (K) des Koppelgelenks relativ zu einer fiktiven Achse, die in der besagten Ebene liegt und parallel zur Antriebsachse (A) verläuft, um einen Winkel von 3° bis 10° geneigt ist.

5. Scheibenwischerantrieb nach einem der vorhergehenden Ansprüche, **dadurch gekennzeichnet, daß** das Koppelgelenk ein Schwenkgelenk (18) ist, das mit dem Koppelhebel (28) durch ein weiteres Schwenkgelenk (26) verbunden ist, dessen Schwenkachse zur Schwenkachse des ersten Schwenkgelenkes senkrecht verläuft.

6. Scheibenwischerantrieb nach einem der Ansprüche 1 bis 4, **dadurch gekennzeichnet, daß** das Koppelgelenk ein Kardangelenk ist.

7. Scheibenwischerantrieb nach einem der vorhergehenden Ansprüche, **dadurch gekennzeichnet, daß** der Koppelhebel (28) mit dem Abtriebshebel (30) durch ein Kardangelenk verbunden ist.

8. Scheibenwischerantrieb nach einem der Ansprüche 1 bis 6, **dadurch gekennzeichnet, daß** der Koppelhebel (28) mit dem Abtriebshebel (30) durch ein Kugelgelenk (32) verbunden ist.

9. Scheibenwischerantrieb nach einem der Ansprüche 1 bis 6, **dadurch gekennzeichnet, daß** der Koppelhebel mit dem Abtriebshebel durch zwei Schwenkgelenke verbunden ist.

10. Scheibenwischerantrieb nach einem der vorhergehenden Ansprüche, **dadurch gekennzeichnet, daß** der Abtriebshebel (30) mit einer Blindlagerwelle (B) verbunden ist, die parallel zur Antriebsachse (A) verläuft.

## Claims

1. Windscreen wiper drive having a driving mechanism, a driving lever (16), the first end of which is connected to the driving mechanism, so that it can be pivoted about a driving axis (A), a coupling lever (28), the first end of which is connected to the second end of the driving lever by a coupling joint (18) with a defined axis of rotation (K) and the second end of which is connected to a windscreen wiper blade (12), and an output lever (30) which is connected to the coupling lever, **characterized in that** the axis of rotation (K) of the coupling joint and the driving axis (A) of the driving lever are not parallel to each other.

2. Windscreen wiper drive according to Claim 1, **characterized in that** the axis of rotation (K) of the coupling joint, as used in a plane which is defined by the driving axis (A) and the central point of the coupling joint, is at a smaller distance from the driving axis (A) on that side of the driving lever (16) to which the windscreen wiper blade (12) is directed than on the opposite side.

3. Windscreen wiper drive according to Claim 2, **characterized in that** the axis of rotation (K) of the coupling joint lies in the said plane.

4. Windscreen wiper drive according to either of Claims 2 and 3, **characterized in that** the axis of rotation (K) of the coupling joint is inclined by an angle of 3° to 10° relative to a fictitious axis which lies in the said plane and runs parallel to the driving axis (A).

5. Windscreen wiper drive according to one of the preceding claims, **characterized in that** the coupling joint is a pivoting joint (18) which is connected to the coupling lever (28) by a further pivoting joint (26), the pivoting axis of which runs perpendicularly with respect to the pivoting axis of the first pivoting joint.

6. Windscreen wiper drive according to one of Claims 1 to 4, **characterized in that** the coupling joint is a universal joint.

7. Windscreen wiper drive according to one of the preceding claims, **characterized in that** the coupling lever (28) is connected to the output lever (30) by a universal joint.

8. Windscreen wiper drive according to one of Claims 1 to 6, **characterized in that** the coupling lever (28) is connected to the output lever (30) by a ball-and-socket joint (32).

9. Windscreen wiper drive according to one of Claims 1 to 6, **characterized in that** the coupling lever is connected to the output lever by two pivoting joints.

10. Windscreen wiper drive according to one of the preceding claims, **characterized in that** the output lever (30) is connected to a blind bearing shaft (B) which runs parallel to the driving axis (A).

## Revendications

1. Entraînement d'essuie-glace comprenant un mécanisme d'entraînement, un levier d'entraînement (16) dont la première extrémité est reliée au mécanisme d'entraînement pour pivoter autour d'un axe d'entraînement (A), un levier de couplage (28) dont la première extrémité est reliée à la seconde extrémité du levier d'entraînement par une articulation de couplage (18) d'axe de rotation défini (K) et dont la seconde extrémité est reliée à un balai d'essuie-glace (12) ainsi qu'un levier de sortie (30) relié au levier de couplage,
**caractérisé en ce que**
l'axe de rotation (K) de l'articulation de couplage et l'axe d'entraînement (A) du levier d'entraînement ne sont pas parallèles.

2. Entraînement d'essuie-glace selon la revendication 1,
**caractérisé en ce que**
l'axe de rotation (K) de l'articulation de couplage considéré dans un plan défini par l'axe d'entraînement (A) et le centre de l'articulation de couplage du côté du levier d'entraînement (16) vers lequel est tourné le balai d'essuie-glace (12) est moins distant de l'axe d'entraînement (A) que du côté opposé.

3. Entraînement d'essuie-glace selon la revendication 2,
**caractérisé en ce que**
l'axe de rotation (K) de l'articulation de couplage se situe dans le plan indiqué.

4. Entraînement d'essuie-glace selon l'une des revendications 2 et 3,
**caractérisé en ce que**
l'axe de rotation (K) de l'articulation de couplage est incliné par rapport à un axe fictif situé dans le plan mentionné et est parallèle à l'axe d'entraînement (A), l'inclinaison correspondant à un angle de 3° à 10°.

5. Entraînement d'essuie-glace selon l'une des revendications précédentes,
**caractérisé en ce que**
l'articulation de couplage est une articulation de pivotement (18) reliée au levier de couplage (28) par une autre articulation de pivotement (26) dont l'axe de pivotement est perpendiculaire à l'axe de pivotement de la première articulation de pivotement.

6. Entraînement d'essuie-glace selon l'une des revendications 1 à 4,
**caractérisé en ce que**
l'articulation de couplage est une articulation à la cardan.

7. Entraînement d'essuie-glace selon l'une des revendications précédentes,
**caractérisé en ce que**
le levier de couplage (28) est relié au levier de sortie (30) par une articulation à la cardan.

8. Entraînement d'essuie-glace selon l'une des revendications 1 à 6,
**caractérisé en ce que**
le levier de couplage (28) est relié au levier de sortie (30) par une articulation à rotule (32).

9. Entraînement d'essuie-glace selon l'une des revendications 1 à 6,
**caractérisé en ce que**
le levier de couplage est relié au levier de sortie par deux articulations de pivotement.

10. Entraînement d'essuie-glace selon l'une des revendications précédentes,
**caractérisé en ce que**
le levier de sortie (30) est relié à un axe de faux palier (B) parallèle à l'axe d'entraînement (A).
